(19) Europäisches Patentamt
European Patent Office
Office européen des brevets

(11) Veröffentlichungsnummer: **0 360 031 B1**

(12) **EUROPÄISCHE PATENTSCHRIFT**

(45) Veröffentlichungstag der Patentschrift: **08.06.94**

(51) Int. Cl.[5]: **C08K 3/38**, C08K 3/34, C08K 3/32, C08K 3/24, C08K 3/22

(21) Anmeldenummer: **89115766.1**

(22) Anmeldetag: **26.08.89**

Die Akte enthält technische Angaben, die nach dem Eingang der Anmeldung eingereicht wurden und die nicht in dieser Patentschrift enthalten sind.

# (54) Temperaturbeständige thermoplastische Formmassen.

(30) Priorität: **01.09.88 DE 3829712**

(43) Veröffentlichungstag der Anmeldung: **28.03.90 Patentblatt 90/13**

(45) Bekanntmachung des Hinweises auf die Patenterteilung: **08.06.94 Patentblatt 94/23**

(84) Benannte Vertragsstaaten: **DE ES FR GB IT NL**

(56) Entgegenhaltungen:
**EP-A- 0 197 727**
**EP-A- 0 283 914**
**US-A- 3 468 844**
**US-A- 4 130 538**
**US-A- 4 713 407**

**CHEMICAL ABSTRACTS, Band 102, Nr. 14, 8. April 1985, Seite 39, Zusammenfassung Nr. 114494u, Columbus, Ohio, US; & JP-A-59 138 229**

(73) Patentinhaber: **BASF Aktiengesellschaft**
**Carl-Bosch-Strasse 38**
**D-67063 Ludwigshafen(DE)**

(72) Erfinder: **Buchert, Hermann, Dr.**
**An der Nolzeruhe 8c**
**D-6702 Bad Duerkheim(DE)**
Erfinder: **Heinz, Gerhard, Dr.**
**Im Vogelsang 2**
**D-6719 Weisenheim(DE)**
Erfinder: **Ittemann, Peter, Dr.**
**217 Manor House Mill**
**Fort Mill, S.C. 29715(US)**
Erfinder: **Kopietz, Michael, Dr.**
**Colgensteiner Weg 13**
**D-6718 Gruenstadt(DE)**
Erfinder: **Koch, Juergen, Dr.**
**Woogstrasse 36**
**D-6708 Neuhofen(DE)**
Erfinder: **Eberle, Wolfgang, Dr.**
**Am Hemel 20**
**D-6500 Mainz 1(DE)**
Erfinder: **Zeiner, Hartmut, Dr.**
**Paracelsusstrasse 18**
**D-6700 Ludwigshafen(DE)**

EP 0 360 031 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**ELIAS/VOHWINKEL, Neue polymere Werkstoffe für die industrielle Anwendung, 2. Folge, 1983, Carl Hanser Verlag, München Wien, S. 172, 173, 177**

**K. STOECKHERT (Hrsg.), Kunststoff-Lexikon, 7. Aufl., 1981, Carl Hanser Verlag, München Wien, S. 189**

**Römpps Chemie-Lexikon, 8. Aufl., 1987, Franckh'sche Verlagsbuchhandlung, Stuttgart, S. 3317**

## Beschreibung

Die Erfindung betrifft temperaturbeständige thermoplastische Formmassen mit geringer Wärmeentwicklung im Brandfall, die Zur Herstellung von Innenteilen für Personenbeförderungsmittel, insbesondere Flugzeugen, geeignet sind.

Beim Innenausbau von Flugzeugen werden Formteile aus thermoplastischen Kunststoffen verwendet. Bisher wurden dabei ABS-Polymerisate, Polvinylchlorid oder Polycarbonat eingesetzt. Diese Werkstoffe entwickeln aber im Brandfall viel Wärme, toxische Gase und Rauchgase hoher optischer Dichte, insbesondere in den kritischen ersten 5 Minuten nach Ausbruch eines Feuers. Hochtemperaturbeständige Kunststoffe, wie z.B. Polyethersulfone, weisen diesen Nachteil nicht auf; sie haben im Brandfall eine niedrige Rauchgasdichte und bilden nur in geringen Mengen giftige Verbrennungsgase. Sie erfüllen die Anforderungen der ATS/1000.001 (Airbus Technical Specification). Dagegen genügen sie noch nicht ganz den verschärften Anforderungen für die Wärmeentwicklung im Brandfall. Diese wurden kürzlich von der Federal Aviation Administration (FAA) erarbeitet. Sie sehen für 1988 vor, daß die Werte für Heat Release (HR) und Heat Release Rate (HRR) (gemessen nach dem FAR-Test Nr. 25 853 der FAA vom 20.02.87) unter 100 $KW \cdot min \cdot m^{-2}$ bzw. unter 100 $KW \cdot m^{-2}$ liegen; ab 1990 sollen die Werte weniger als 65 $KW \cdot min \cdot m^{-2}$ bzw. weniger als 65 $KW \cdot m^{-2}$ betragen.

Anorganische Boroxide als flammhemmende Zusätze waren aus der US-A-4 130 538 bekannt. Aus der US-A-3 468 844 waren ferner Formmassen aus thermoplastischen Polyarylenethern bekannt, die Antimonoxide als flammhemmende Zusätze enthalten.

Der Erfindung lag nun die Aufgabe zugrunde, thermoplastische Formmassen bereitzustellen, welche im Brandfall eine niedrige Rauchgasdichte aufweisen, geringe Mengen an giftigen Verbrennungsgasen entwikkeln und den verschärften Bedingungen der FAA bezüglich Wärmeentwicklung genügen.

Es wurde nun gefunden, daß diese Bedingungen erfüllt werden, wenn man Formmassen auf der Basis von Polyethersulfonen oder Polyetherketonen Boroxide oder Salze der entsprechenden Säuren zusetzt.

Gegenstand der Erfindung sind demzufolge thermoplastische Formmassen, enthaltend

A. 100 Gew. -Teile eines Polyethersulfons, Polyetherketons, eines entsprechenden Copolymers oder einer Mischung solcher Polymerer jeweils mit einer Dauergebrauchstemperatur oberhalb von 130 °C und

B. 0,5 bis 50 Gew.-Teile

a) eines Oxids des Bors oder

b) eines Salzes der Sauerstoffsäure des Bors,

jeweils mit Schmelzpunkten zwischen 300 °C und 1400 °C, oder

c) einer Verbindung, welche beim Erhitzen ein Oxid a) oder ein Salz b) bildet.

Als Polyethersulfone, Polyetherketone oder deren Copolymere kommen solche mit einer Dauergebrauchstemperatur (nach UL 746 B) oberhalb von 130 °C, vorzugsweise oberhalb von 150 °C in Frage. Bevorzugt sind: Polyethersulfone, insbesondere solche der Strukturen:

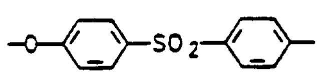

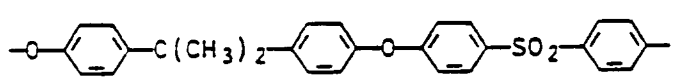 ;

Polyetherketone, insbesondere solche der Strukturen:

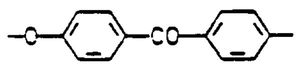

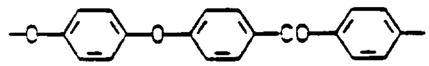

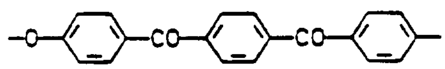

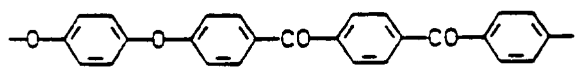

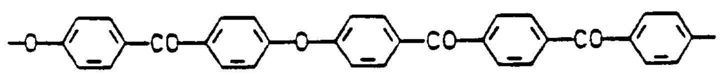

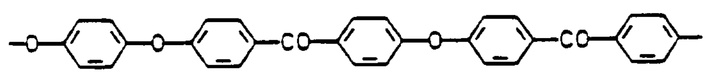 ;

sowie entsprechende statistische und Blockcopolymere und Mischungen von zwei oder mehreren dieser Polymeren.

Diese Polymeren enthalten erfindungsgemäß 0,5 bis 50 Gew.-Teile, vorzugsweise 0,5 bis 20 Gew.-Teile und insbesondere 1 bis 5 Gew.-Teile eines die Wärmeentwicklung im Brandfall hemmenden Füllstoffs B. Besonders bevorzugt sind solche anorganischen Füllstoffe, die beim Abkühlen aus der Schmelze in einen amorphen, glasartigen Zustand übergehen und dabei eine ebene oder räumliche Netzwerkstruktur ausbilden. Diese kann das geschmolzene Polymer benetzen und mit einer Schmelzschicht überziehen. Die Füllstoffe B sollen vorzugsweise IR-Strahlung stark absorbieren bzw. reflektieren. Geeignet sind Boroxide und Salze, vorzugsweise Na-, K-, Ca-, Zn- und Al-Salze von Sauerstoffsäuren des Bors, sofern sie einen Schmelzpunkt zwischen 300 °C und 1400 °C, vorzugsweise zwischen 350 °C und 1200 °C und insbesondere zwischen 400 °C und 1000 °C aufweisen, sowie Verbindungen, wie z.B. Hydrate oder Carbonate, die im Brandfall (z.B. bei Temperaturen ab etwa 500 °C) ein solches Oxid oder Salz bilden. Auch Gemische der genannten Stoffklassen sind geeignet.

Geeignete Füllstoffe sind z.B.: $B_2O_3$, $NaBO_2$, $KB_5O_8$, $Na_2B_4O_7$, $Ca(BO_2)_2$ oder $Zn_2B_6O_{11}$.

Neben diesen, die Wärmeentwicklung im Brandfall verhindernden Füllstoffen können die Formmassen noch andere übliche Zusatzstoffe enthalten, z.B. Glasfasern, Kohlenstoff-Fasern, Pigmente, mineralische Verstärkungsmittel, Zähmodifizierungsmittel, wie z.B. Siloxane, Fluorelastomere, Polyphosphogene, Stabilisatoren sowie Schmier- und Gleitmittel. Die faserartigen Zusatzstoffe können als unidirektionales Gelege, als Gewebe, Gewirke oder Vlies eingesetzt werden.

Die Einarbeitung der Füllstoffe und ggf. weiterer Zusatzstoffe erfolgt nach üblichen Methoden. Bevorzugt werden die Füllstoffe als feingemahlene Pulver eingesetzt und z.B. in einem Extruder mit dem Kunststoff vermischt. Man kann aber auch Lösungen oder Suspensionen der Salze einarbeiten.

Im Fall von $B_2O_3$ kann ein Masterbatch aus Füllstoff und Polymerschmelze hergestellt werden.

Die erfindungsgemäßen Formmassen eignen sich insbesondere zur Herstellung von Innenteilen von Personenbeförderungsmitteln, z.B. von Folien, Abdeckungen, Spritzgußteilen, Platten, Verbundwerkstoffen, z.B. mit Schaumstoffen. Außer für Flugzeuginnenteile sind die Formmassen noch für Teile in Hochgeschwindigkeitszügen, Omnibussen oder Untergrundbahnen geeignet.

Die Herstellung der Formteile erfolgt wie üblich durch Extrusion, Tiefziehen, Spritzguß, Laminieren, Verschweißen oder Verkleben. Die Teile können mit Lacken lackiert oder mit schmutzabweisenden Folien beschichtet werden. Extrudierte Platten können durch Koextrusion mit einer Schicht überzogen werden, die die Oxide bzw. Salze in hoher Konzentration enthält. Sie zeichnen sich durch niedrige HR- bzw. HRR-Werte von weniger als 65, vorzugsweise weniger als 60 $KW \cdot min \cdot m^{-2}$ bzw. $kwm^{-2}$ aus.

Die in den Beispielen genannten Prozente beziehen sich auf das Gewicht. Die Einarbeitung erfolgt durch Einkonfektionieren auf einem Extruder von feinpulverigem Füllstoff in den jeweiligen Thermoplasten.

Gemessen wurden an 2 mm dicken Platten die HR-Werte ($KW \cdot min \cdot m^{-2}$) und die HRR-Werte ($KW \cdot m^{-2}$), in den Tabellen sind jeweils Mittelwerte aus 4 Messungen angegeben.

Beispiel 1

Füllstoff $Zn_2B_6O_{11}$, Thermoplast Polyethersulfon ULTRASON® E, Einarbeitungstemperatur 370 °C

| % $Zn_2B_6O_{11}$ | HR | HRR |
|---|---|---|
| 0 | 30 | 68 |
| 1 | 8 | 57 |
| 3 | 7 | 48 |
| 5 | 6 | 45 |

Beispiel 2

Die HRR- und HR-Werte von gefülltem und ungefülltem Polyethersulfon ULTRASON® E 2000 weiß 20126 wurden gemessen an 2 mm dicken Platten, Einarbeitungstemperatur 370 °C

| % Füllstoff | HRR $kwm^{-2}$ | HR kw min $m^{-2}$ |
|---|---|---|
| 0 | 66 | 22 |
| 3 % $B_2O_3$ | 56 | 9 |
| 5 % $B_2O_3$ | 50 | 3 |

Beispiel 3

HRR- und HR-Werte an mit Zinkborat gefüllten Thermoplasten

| Thermoplast | $Zn_2B_6O_{11}$ % | Einarbeitungstemperatur °C | Plattendicke mm | HRR $kW \cdot m^{-2}$ | HR $kW \cdot min \cdot m^{-2}$ |
|---|---|---|---|---|---|
| ULTRAPEK® KR 4177 | - | 390 | 2,3 | 69 | 0 |
| " | 4 | 390 | 2,3 | 49 | 0 |

ULTRAPEK® ist ein Polyetherketon der Fa. BASF

## Patentansprüche

**1.** Füllstoffhaltige thermoplastische Formmassen, enthaltend

A. 100 Gew.-Teile eines Polyethersulfons, Polyetherketons, eines entsprechenden Copolymers oder einer Mischung solcher Polymerer, jeweils mit einer Dauergebrauchstemperatur oberhalb von 130 °C und
B. 0,5 bis 50 Gew.-Teile
a) eines Oxids des Bors oder
b) eines Salzes der Sauerstoffsäure des Bors,
jeweils mit Schmelzpunkten zwischen 300 °C und 1400 °C, oder
c) einer Verbindung, welche beim Erhitzen ein Oxid a) oder ein Salz b) bildet.

**2.** Thermoplastische Formmassen nach Anspruch 1, dadurch gekennzeichnet, daß die Komponente B aus folgenden Verbindungen ausgewählt ist: $B_2O_3$, $NaBO_2$, $Na_2B_4O_7$, $KB_5O_8$, $Ca(BO_2)_2$, $Zn_2B_6O_{11}$ oder $Zn(BO_2)_2$.

**3.** Thermoplastische Formmassen nach Anspruch 1, dadurch gekennzeichnet, daß die Komponente B eine Verbindung ist, die beim Abkühlen aus der Schmelze in den amorphen, glasartigen Zustand übergeht.

**4.** Verwendung der thermoplastischen Formmassen nach Anspruch 1 zur Herstellung von Innenteilen für Flugzeuge und andere Personenbeförderungsmittel.

**5.** Flugzeug-Innenteile, hergestellt unter Verwendung der thermoplastischen Formmassen gemäß Anspruch 1.

**Claims**

**1.** Filler-containing thermoplastic molding compositions containing
A. 100 parts by weight of a polyether sulfone, a polyether ketone, a corresponding copolymer or a mixture thereof, each having a sustained use temperature of above 130 °C, and
B. from 0.5 to 50 parts by weight
a) of an oxide of boron or
b) of a salt of an oxygen acid of boron,
each with a melting point of from 300 °C to 1400 °C, or
c) of a compound which on heating forms an oxide a) or a salt b).

**2.** Thermoplastic molding compositions as claimed in claim 1, wherein component B is selected from the following compounds: $B_2O_3$, $NaBO_2$, $Na_2B_4O_7$, $KB_5O_8$, $Ca(BO_2)_2$, $Zn_2B_6O_{11}$ or $Zn(BO_2)_2$.

**3.** Thermoplastic molding composition as claimed in claim 1, wherein component B is a compound which on cooling turns from a molten state into an amorphous, glassy state.

**4.** The use of the thermoplastic molding compositions of claim 1 for producing interior components for aircraft and other vehicles for the conveyance of passengers.

**5.** An aircraft interior component produced by the use of the thermoplastic molding compositions of claim 1.

**Revendications**

**1.** Masses à mouler thermoplastiques chargées, contenant
A. 100 parties en poids d'une polyéthersulfone, d'une polyéthercétone, d'un copolymère correspondant ou d'un mélange de ces polymères, ayant chacun une température de service permanent supérieure à 130 °C et
B. 0,5 à 50 parties en poids
a) d'un oxyde du bore ou
b) d'un sel de l'acide oxygéné du bore,
ayant chacun un point de fusion compris entre 300 °C et 1400 °C, ou
c) d'un composé qui forme, au chauffage, un oxyde a) ou un sel b).

2. Masses à mouler thermoplastiques selon la revendication 1, caractérisées en ce que le composant B est choisi parmi les composés suivants: $B_2O_3$, $NaBO_2$, $Na_2B_4O_7$, $KB_5O_8$, $Ca(BO_2)_2$, $Zn_2B_6O_{11}$ ou Zn-$(BO_2)_2$.

3. Masses à mouler thermoplastiques selon la revendication 1, caractérisées en ce que le composant B est un composé qui, par refroidissement de la masse fondue, passe à l'état vitreux amorphe.

4. Utilisation des masses à mouler thermoplastiques selon la revendication 1 pour la fabrication de pièces intérieures pour des avions et d'autres moyens de transport de personnes.

5. Pièces intérieures d'avions, fabriquées en utilisant les masses à mouler thermoplastiques selon la revendication 1.